# EUROPÄISCHE PATENTANMELDUNG

(11) **EP 1 543 907 A1**
(43) Veröffentlichungstag der Anmeldung: **22.06.2005**
(21) Anmeldenummer: 04106515.2
(22) Anmeldetag: 13.12.2004
(51) Int. Cl.: B23C 5/22, B23B 51/04

(54) **Rotierendes, spanabhebendes Werkzeug mit einem Tragkörper und mit mehreren Schneidelementen**

(30) Priorität: 15.12.2003 DE 10358568
(71) Anmelder: HILTI Aktiengesellschaft, 9494 Schaan (LI)
(72) Erfinder: Sander, Bernhard, 81379 München (DE); Tichy, Stefan, 8882 Unterterzen (CH); Mugg, Peter, 6806 Feldkirch (AT); Noser, Martin, 9494 Schaan (LI)
(74) Vertreter: Wildi, Roland

(57) **Zusammenfassung**

Ein rotierendes, spanabhebendes Werkzeug (1) mit einem Tragkörper (2) weist am Tragkörper (2) mehrere Ausnehmungen (4) auf, in denen jeweils ein, eine Schneidkante (6) aufweisendes Schneidelement (5) angeordnet ist. Das Schneidelement (5) ist mittels eines Spannelementes (7) mit dem Tragkörper (2) verspannt. Das Spannelement (7) ist auf der, der Schneidkante (6) abgewandten Seite (8) des Schneidelementes (5) angeordnet.

## Beschreibung

### Technisches Gebiet

Die Erfindung betrifft ein rotierendes, spanabhebendes Werkzeug mit einem Tragkörper, mit mehreren, Schneidkanten aufweisenden Schneidelementen und mit mehreren Ausnehmungen am Tragkörper, in denen jeweils zumindest eines der Schneidelemente mittels eines im Wesentlichen parallel zur Erstreckung der Ausnehmungen versetzbaren Spannelementes festlegbar ist.

### Stand der Technik

Solche Werkzeuge eignen sich für schneidende und bohrende Bearbeitung eines harten Untergrundes, wie beispielsweise Beton, Stein oder Mauerwerk, im Nass- und Trockenverfahren. Die Schneidelemente werden üblicherweise mittels Reib- und/oder Formschluss am Tragkörper des Werkzeuges befestigt.

Aus der US 3,308,689 A ist ein rotierendes, spanabhebendes Werkzeug bekannt, bei dem die Schneidelemente von einer Durchgangsbohrung durchsetzt sind. Die Durchgangsbohrung dient als Aufnahme für eine Schraube, welche die Schneidelemente und den Tragkörper miteinander verspannt. Nachteilig an der bekannten Lösung ist, dass die Schneidelemente durch die Durchgangsbohrung stark geschwächt werden. Harte Untergründe können mit diesem Werkzeug somit nicht bearbeitet werden. Auch weichere Untergründe können infolge von stoss- und schockartigen Belastungen auf das Werkzeug zu einer Zerstörung des Schneidkörpers führen.

Aus der DE 101 37 747 A1 der Anmelderin ist ein rotierendes, spanabhebendes Werkzeug bekannt, bei dem die Schneidelemente mittels eines beweglichen, elastischen segmentförmigen Abschnitts, auf den eine Spannschraube mit einem konischen Kopf wirkt, an dem Trägerkörper gehalten werden. Die Spannschraube ist auf der, die Schneidkante aufweisende Seite des Schneidelementes angeordnet. Die radiale Fixierung des Schneidelementes erfolgt durch einen zylindrischen Stift, der in jeweils eine entsprechende Vertiefung am Schneidelement und eine entsprechende Vertiefung am Trägerkörper ragt. Dieses Werkzeug eignet sich für die Bearbeitung von harten Untergründen. Die Befestigung der Schneidelemente ist jedoch komplex in ihrem Aufbau und erfordert eine Vielzahl von Einzelteilen sowie hohe Anforderungen an die Einhaltung von Toleranzen bei der Fertigung des Werkzeuges.

Aus der WO 97/02916 A1 ist ein rotierendes, spanabhebendes Werkzeug bekannt, bei dem die Schneidelemente mittels eines Keils, auf den jeweils zwei Spannschrauben mit konischen Köpfen wirken, an dem Trägerkörper gehalten werden. Die Spannschrauben sind auf der, die Schneidkante des Schneidelementes aufweisende Seite des Schneidelementes angeordnet. Nachteilig an der bekannten Lösung ist, dass die Schneidelemente radial nur über den Reibschluss an dem Tragkörper fixiert sind, was bei der Bearbeitung von harten Untergründen zu einem Ausfall einzelner beziehungsweise mehrerer Schneidelemente führen kann.

Aus der US 5,597,270 A ist ein rotierendes, spanabhebendes Werkzeug bekannt, bei dem die Schneidelemente mit einer Spannschraube, die einen kegelförmigen Kopf mit einer abgerundeten Oberfläche aufweist, direkt mit dem Trägerkörper verspannt werden. Die Spannschraube ist auf der, die Schneidkante aufweisenden Seite des Schneidelementes angeordnet. Zur radialen Fixierung des Schneidelementes weist dieses eine bereichsweise angeordnete Vertiefung auf, mit der die Spannschraube zumindest bereichsweise im verspannten Zustand in Eingriff steht. Nachteilig an der bekannten Lösung ist, dass die Spannschraube auf die, die Schneidkante aufweisende Seite des Schneidelementes wirkt und an dieser Seite des Schneidelementes eine Vertiefung ausgebildet ist. Im Betrieb des Werkzeuges treten insbesondere an der, die Schneidkante aufweisende Seite des Schneidelementes hohe Spannungsspitzen auf, weshalb bei dieser Art der Befestigung die Schneidelemente im Betrieb zerstört werden können.

### Darstellung der Erfindung

Aufgabe der Erfindung ist es, ein rotierendes, spanabhebendes Werkzeug zu schaffen, das für die Bearbeitung von verschiedenen, insbesondere harten Untergründen geeignet ist und bei dem die Schneidelemente sicher mittels einer einfachen und robusten Befestigung am Tragkörper gehalten sind.

Die Aufgabe ist durch die Merkmale des unabhängigen Anspruchs gelöst. Vorteilhafte Weiterbildungen sind in den Unteransprüchen dargelegt.

Gemäss der Erfindung ist das Spannelement auf der, der Schneidkante abgewandten Seite des Schneidelementes angeordnet.

Das Spannelement wirkt auf die, der Schneidkante abgewandten Seite zumeist nur auf einen kleinen Bereich. Die, die Schneidkante aufweisende Seite des Schneidelementes wird flächig an eine Auflagefläche der Ausnehmung im Tragkörper gepresst, womit die Spannungsspitzen in diesem Bereich des Schneidelementes gegenüber den herkömmlichen Befestigungsarten wesentlich reduziert und somit die Nutzbarkeit der Schneidelemente erhöht wird. Durch die Anordnung des Spannelementes im Spanschatten ist das Spannelement weitgehend vor den abgebauten Spänen geschützt und gegenüber Anordnungen der Spannschraube auf der, die Schneidkante aufweisende Seite des Schneidelementes der Abrieb am Spannelement und dessen Verschmutzung durch Bohrstaub reduziert. Es sind nur wenige Bearbeitungsschritte am Tragkörper erforderlich um die Befestigungen für die Schneidelemente an dem Tragkörper zu schaffen. Des Weiteren können bei der Fertigung anfallende Toleranzen einfach und bei Gewährleistung einer robusten Befestigung der Schneidelemente am Tragkörper ausgeglichen werden.

Vorzugsweise umfasst das Spannelement eine Spannschraube mit einem Drehmomentübertragungsabschnitt. Mittels der Spannschraube kann das Schneidelement einfach nachgespannt oder ausgewechselt werden. Die Gebrauchsdauer des Tragkörpers ist wesentlich länger als die Gebrauchsdauer der Schneidelemente, so dass mit der einfachen Auswechselbarkeit der Schneidelemente die Gesamtkosten für das Werkzeug reduziert werden. Mit der Anordnung der Spannschraube im Spanschatten wird der Bereich mit dem Drehmomentübertragungsabschnitt weniger durch Abrieb belastet und steht für den An- beziehungsweise Eingriff eines Montagewerkzeuges auch nach einer Verwendung sowie längeren Nutzung des Werkzeuges zur Verfügung. Der Drehmomentübertragungsabschnitt ist beispielsweise als eine Aufnahme für einen Inbusschlüssel oder für einen Torxbit ausgebildet. In einer Variante zu einer Spannschraube ist das Spannelement beispielsweise ein Spannkeil, der in eine entsprechend ausgebildete Ausnehmung an der, der Schneidkante abgewandten Seite des Schneidelementes neben diesem eingetrieben wird.

Bevorzugt weist das Spannelement einen kegelstumpfförmig ausgebildeten Kopf und einen Verbindungsabschnitt auf, wobei sich der kegelstumpfförmig ausgebildete Kopf zum Verbindungsabschnitt hin in einem Winkel verjüngt. Vorteilhafterweise ist der kegelstumpfförmig ausgebildete Kopf linear abnehmend ausgebildet. Mit dem kegelstumpfförmig ausgebildeten Kopf lassen sich hohe Verspannungskräfte erzeugen. Die Grösse des Winkels des kegelstumpfförmig ausgebildeten Kopfes bestimmt die Grösse der erzeugten Verspannkraft, wobei der Winkel in einem Bereich von 1° bis 30° liegt. Vorzugsweise liegt der Winkel im Bereich von 2° bis 15°, so dass das Spannelement einfach in den Tragkörper einführbar ist und das Schneidelement mit dem Trägerkörper verspannbar ist. Ist das Spannelement eine Spannschraube, so ist der Verbindungsabschnitt vorzugsweise als Gewindeabschnitt ausgebildet, der beispielsweise in eine mit einem Gewinde versehene Bohrung im Tragkörper eingeschraubt werden kann.

Vorzugsweise ist das Schneidelement ein PKD-Schneidelement. PKD (poly-kristalliner Diamant) - Schneidelemente zeichnen sich durch deren hohe Bruchzähigkeit aus und finden bei rotierenden, spanabhebenden Werkzeuge seit längerem Anwendung. Mittels der Anordnung des Spannelementes an der, der Schneidkanten abgewandten Seite des Schneidelementes treten an der, die Schneidkante aufweisenden Seite des Schneidelementes im Wesentlichen nur die bei der Bearbeitung des Untergrundes entstehenden Spannungsspitzen in dem Schneidelement auf, wodurch die Schneideelemente weniger schnell als bei den bekannten Werkzeugen abgenutzt, beziehungsweise zerstört werden. Vorteilhafterweise weist das Schneidelement eine Trägerschicht auf, welche an einer Seite mit einem, die Schneidkante aufweisenden PKD-Element versehen ist. Das Material der Trägerschicht, beziehungsweise die Ausgestaltung der Trägerschicht ist beispielsweise derart gewählt, dass zumindest ein wesentlicher Teil der Spannungen auf das Schneidelement infolge des Spannelementes von der Trägerschicht übernommen werden.

Bevorzugt weist das Schneidelement an der, der Schneidkante abgewandten Seite eine Vertiefung auf, die mit einem Spannabschnitt am Kopf des Spannelementes in Wirkverbindung bringbar ist. Neben einem Reibschluss zwischen dem Schneidelement und dem Spannelement wird so ein Formschluss geschaffen, der die radiale, beziehungsweise die seitliche Fixierung des Schneidelementes gewährleistet. Bei einem Schneidelement, bei dem ein, die Schneidkante aufweisendes PKD-Element auf einer Trägerschicht angeordnet ist, lässt sich mit einfachen und kostengünstigen Mitteln und Verfahren die Vertiefung an dem Schneidelement erstellen.

Vorzugsweise ist die Vertiefung komplementär zu dem Spannabschnitt des Spannelementes ausgebildet ist. Der Spannabschnitt des Spannelementes liegt bei dieser Ausführung flächig an dem Schneidelement an, womit ein Formschluss geschaffen werden kann, womit hohe Halte- und Spannkräfte auf des Spannelement übertragbar sind.

Bevorzugt weist das Spannelement eine Breite auf, die maximal der Breite des Schneidelementes entspricht. In dieser Ausführung liegt das Spannelement vollständig im Spanschatten und das Werkzeug kann in den zu bearbeitenden Untergrund ohne eine Behinderung durch die angeordneten Spannelemente eindringen. Es entfallen nachträgliche Bearbeitungsschritte zur Reduktion der Breite des Spannelementes nach der erstellten Befestigung der Schneidelemente.

Der Trägerkörper ist in einer bevorzugten Ausführungsform des Werkzeuges hülsenförmig ausgebildet und weist einen Aufnahmebereich für eine Werkzeugaufnahme eines Gerätes und eine vom Aufnahmebereich beabstandete Stirnseite auf, wobei die mehreren Ausnehmungen sich von der Stirnseite ausgehend, in Richtung des Aufnahmebereichs erstrecken. Solche Werkzeuge sind beispielsweise als Bohrkronen zur Erstellungen von Öffnungen in Böden, Wänden und Decken von Bauwerken bekannt.

In einer erfindungsgemässen Variante ist der Trägerkörper scheibenförmig mit einem Umfangsbereich ausgebildet und weist einen zentrischen Aufnahmebereich für eine Antriebswelle eines Gerätes auf, wobei die mehreren Ausnehmungen sich von dem Umfangsbereich ausgehend, in Richtung des Aufnahmebereichs erstrecken. Solche Werkzeuge sind beispielsweise als Trennscheiben zum Abtrennen eines Abschnitts eines Elementes oder zur Erstellungen von Schlitzen oder Vertiefungen in Böden, Wänden und Decken von Bauwerken bekannt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand zweier Ausführungsbeispiele näher erläutert. Es zeigen:
Fig. 1 Eine Ansicht auf die Stirnseite eines ersten Ausführungsbeispiels als Bohrkrone;
Fig. 2 eine vergrösserte Seitenteilansicht entlang der Linie II-II in Fig. 1; und
Fig. 3 eine Gesamtansicht eines zweiten Ausführungsbeispiels als Trennscheibe.

Grundsätzlich sind in den Figuren gleiche Teile mit den gleichen Bezugszeichen versehen.

### Wege zur Ausführung der Erfindung

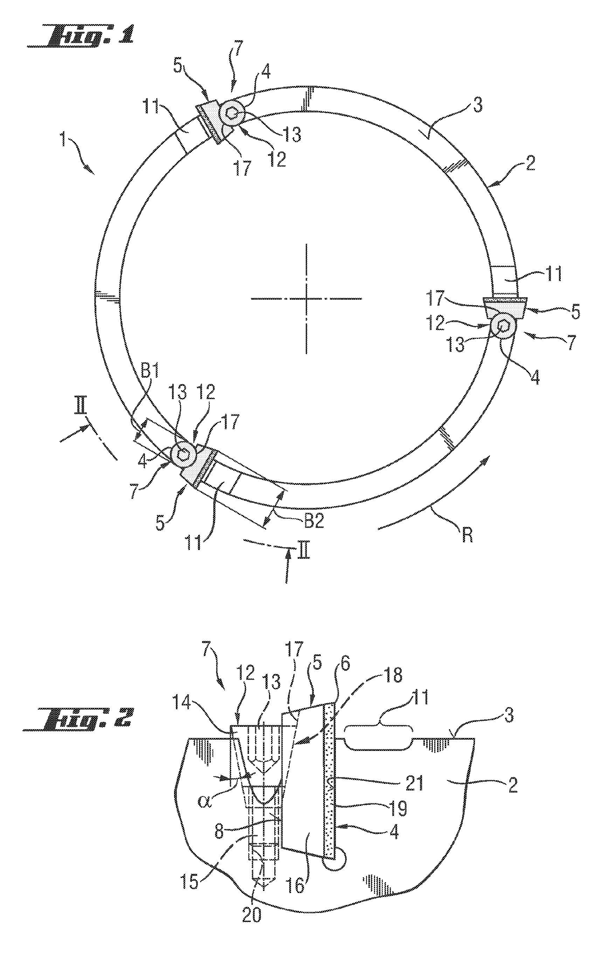

In Fig. 1 und Fig. 2 ist als erfindungsgemässes rotierendes, spanabhebendes Werkzeug 1 eine zylindrische Bohrkrone dargestellt. Das Werkzeug 1 weist eine Hauptrotationsrichtung R zur Bearbeitung des Untergrundes auf. Der Tragkörper 2 des Werkzeuges 1 ist hülsenförmig ausgebildet und weist einen Aufnahmebereich für eine Werkzeugaufnahme eines Gerätes sowie eine von diesem Aufnahmebereich beabstandete Stirnseite 3 auf. Von der Stirnseite 3 ausgehend erstrecken sich drei Ausnehmungen 4 in Richtung des Aufnahmebereiches. In den Ausnehmungen 4 ist jeweils ein Schneidelement 5, das eine Schneidkante 6 aufweist, angeordnet. Mittels im Wesentlichen parallel zur Erstreckung der Ausnehmungen 4 versetzbaren Spannelementen 7 werden die Schneidelemente 5 mit dem Trägerkörper 2 verspannt. Die Spannelemente 7 sind jeweils an der, der Schneidkante 6 abgewandten Seite 8 der Schneidelemente 5 in deren Spanschatten angeordnet.

Vor dem Schneidelement 5, beziehungsweise vor dessen Schneidkante 6 ist ein Spanraum 11 an der Stirnseite 3 des Tragkörpers 2 ausgebildet. Das Spannelement 7 ist eine Spannschraube 12 die eine Aufnahme für einen Inbusschlüssel als Drehmomentübertragungsabschnitt 13 aufweist. Weiter weist die Spannschraube 12 als Verbindungsabschnitt einen Gewindeabschnitt 15 auf, der in eine mit einem Gewinde versehene Bohrung 20 im Tragkörper 2 eingreift. Die Spannschraube 12 weist einen kegelstumpfförmigen Kopf 14 auf, der sich in einem Winkel α von 10°zu dem Gewindeabschnitt 15 hin verjüngt.

Das Schneidelement 5 weist eine Trägerschicht 16 auf, die mit einer Vertiefung 17 versehen ist, in der ein Spannabschnitt 18 am Kopf 14 des Spannelementes 7 beim Verspannen desselben in Wirkverbindung tritt. Die Vertiefung 17 ist komplementär zu dem Spannabschnitt 18 des Spannelementes 7 ausgebildet. Das Schneidelement 5 weist weiter ein PKD-Schneidelement 19 auf, an dem die Schneidkante 6 ausgebildet ist. Das Spannelement 7 weist eine Breite B1 auf, die kleiner als der Betrag der Breite B2 des Schneidelementes 5 ist.

Das Schneidelement 5 wird in die Ausnehmung 4 eingesetzt und die Spannschraube 12 wird in die Bohrung 20 eingeschraubt. Beim Verspannen der Spannschraube 12 kommt ein Abschnitt, im verspannten Zustand der Spannabschnitt 18, des Kopfes 14 mit dem Schneidelement 5 in Wirkverbindung und verspannt dieses mit dem Tragkörper 2. Das Schneidelement 5 liegt dabei flächig an der Auflagefläche 21 der Ausnehmung 4 an. Der Spanraum 11 an der Stirnseite 3 des Tragkörpers 2 ist nicht bis an das Schneidelement 5 geführt, so dass die Erstreckung der Auflagefläche 21 der Erstreckung der Ausnehmung 4 im Tragkörper 2 entspricht und die Auflagefläche 21 bezogen auf die Ausgestaltung der Ausnehmung 4 eine grösstmögliche Fläche aufweist.

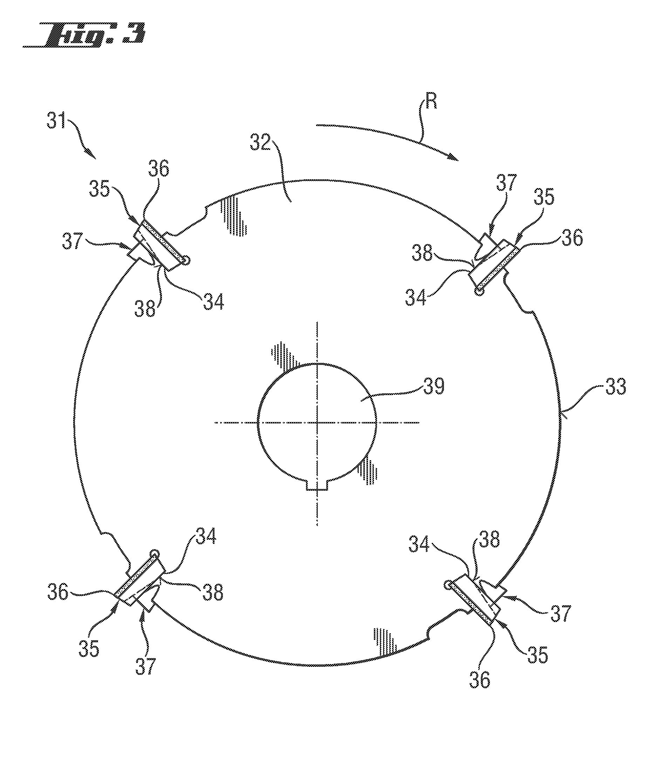

In Fig. 3 ist als ein weiteres Ausführungsbeispiel eines erfindungsgemässen rotierenden, spanabhebenden Werkzeuges 31 eine Trennscheibe dargestellt. Das Werkzeug 31 weist eine Hauptrotationsrotationsrichtung R zur Bearbeitung des Untergrundes auf. Der Trägerkörper 32 ist scheibenförmig mit einem Umfangsbereich 33 ausgebildet und weist einen zentrischen Aufnahmebereich 39 für eine Antriebswelle eines Gerätes auf. An dem Trägerkörper 32 sind vier Ausnehmungen 34 an dem Umfangsbereich 33 ausgebildet, die sich von dem Umfangsbereich 33 ausgehend, in Richtung des Aufnahmebereichs 39 erstrecken. In jeder Ausnehmung 34 ist ein Schneidelement 35 angeordnet, die mittels eines, an der, der Schneidkante 36 abgewandten Seite 38 des Schneidelementes 35 angeordneten Spannelementen 37 mit dem Trägerkörper 32 verspannt sind.

## Patentansprüche

1. Rotierendes, spanabhebendes Werkzeug (1; 31) mit einem Tragkörper (2; 32), mit mehreren, zumindest eine Schneidkante (6; 36) aufweisenden Schneidelementen (5; 35) und mit mehreren Ausnehmungen (4; 34) am Tragkörper (2; 32), in denen jeweils zumindest eines der Schneidelemente (5; 35) mittels eines im Wesentlichen parallel zur Erstreckung der Ausnehmungen (4; 34) versetzbaren Spannelementes (7; 37) festlegbar ist, **dadurch gekennzeichnet, dass** das Spannelement (7; 37) jeweils auf der, der Schneidkante (6; 36) abgewandten Seite (8; 38) der Schneidelemente (5; 35) angeordnet ist.

2. Werkzeug nach Anspruch 1, **dadurch gekennzeichnet, dass** das Spannelement (7; 37) eine Spannschraube (12) mit einem Drehmomentübertragungsabschnitt (13) umfasst.

3. Werkzeug nach Anspruch 1 oder 2, **dadurch gekennzeichnet, dass** das Spannelement (7; 37) einen kegelstumpfförmig ausgebildeten Kopf (14) und einen Verbindungsabschnitt, optional einen Gewindeabschnitt (15), aufweist, wobei sich der kegelstumpfförmig ausgebildete Kopf (14) zum Verbindungsabschnitt hin in einem Winkel (α) verjüngt.

4. Werkzeug nach Anspruch 3, **dadurch gekennzeichnet, dass** der Winkel (α) im Bereich von 1 ° bis 30 °, vorzugsweise im Bereich von 2 ° bis 15° liegt.

5. Werkzeug nach einem der Ansprüche 1 bis 4, **dadurch gekennzeichnet, dass** das Schneidelement (5; 35) ein PKD-Schneidelement (19) ist, das optional eine Trägerschicht (16) aufweist.

6. Werkzeug nach einem der Ansprüche 1 bis 5, **dadurch gekennzeichnet, dass** das Schneidelement (5; 35) an der, der Schneidkante (6; 36) abgewandten Seite (8; 38) eine Vertiefung (17) aufweist, die mit einem Spannabschnitt (18) am Kopf (14) des Spannelementes (7; 37) in Wirkverbindung bringbar ist.

7. Werkzeug nach Anspruch 6, **dadurch gekennzeichnet, dass** die Vertiefung (17) komplementär zu dem Spannabschnitt (18) des Spannelementes (7) ausgebildet ist.

8. Werkzeug nach einem der Ansprüche 1 bis 7, **dadurch gekennzeichnet, dass** das Spannelement (7; 37) eine Breite (B1) aufweist, die maximal der Breite (B2) des Schneidelementes (5; 35) entspricht.

9. Werkzeug nach einem der Ansprüche 1 bis 8, **dadurch gekennzeichnet, dass** der Trägerkörper (2) hülsenförmig ausgebildet ist und einen Aufnahmebereich für eine Werkzeugaufnahme eines Gerätes und eine vom Aufnahmebereich beabstandete Stirnseite (3) aufweist, wobei die mehreren Ausnehmungen (4) sich von der Stirnseite (3) ausgehend, in Richtung des Aufnahmebereichs erstrecken.

10. Werkzeug nach einem der Ansprüche 1 bis 8, **dadurch gekennzeichnet, dass** der Trägerkörper (32) scheibenförmig mit einem Umfangsbereich (33) ausgebildet ist und einen zentrischen Aufnahmebereich (39) für eine Antriebswelle eines Gerätes aufweist, wobei die mehreren Ausnehmungen (34) sich von dem Umfangsbereich (33) ausgehend, in Richtung des Aufnahmebereichs (34) erstrecken.
